# EUROPEAN PATENT APPLICATION

(11) **EP 4 029 908 A1**
(43) Date of publication of application: **20.07.2022**
(21) Application number: 20862737.2
(22) Date of filing: 08.09.2020
(51) Int. Cl.: C08K 5/42, C08L 67/00

(54) **RESIN COMPOSITION**

(30) Priority: 10.09.2019 JP 2019164904
(71) Applicant: Kao Corporation, Chuo-ku Tokyo 103-8210 (JP)
(72) Inventor: ONOUE,Akihiro, Wakayama-shi, Wakayama 640-8580 (JP); YOSHIMURA,Tadanori, Wakayama-shi, Wakayama 640-8580 (JP); NORO,Takahiro, Wakayama-shi, Wakayama 640-8580 (JP)
(74) Representative: Hoffmann Eitle
(86) International application number: PCT/JP2020/033929
(87) International publication number: WO 2021/049481

(57) **Abstract**

The present invention is a resin composition, including: a resin α1 having an aromatic dicarboxylic acid monomer unit A1 having a hydrophilic group, a dicarboxylic acid monomer unit B1 having no hydrophilic group, and an aromatic monomer unit C1; and a resin α2 having an aromatic dicarboxylic acid monomer unit A2 having a hydrophilic group, a dicarboxylic acid monomer unit B2 having no hydrophilic group, and an aliphatic monomer unit C2, wherein the resin α2 includes a monomer unit other than a monomer unit that constitutes the resin α1, and a mass ratio of a content of the resin α1 to a content of the resin α2 is 0.9 or more and 20 or less. According to the present invention, a resin composition that can be removed only with water while maintaining the heat resistance of polymer materials can be provided.

## Description

### TECHNICAL FIELD

The present invention relates to a resin composition.

### BACKGROUND ART

In recent years, due to increase in environmental awareness, waste reduction has been demanded. As one means for achieving this, efforts of recycling products have been made.

Materials obtained by recycling packaging containers collected in a state where the packaging containers include printing layers are colored. For this problem, when water-soluble polymers are used as printing primers, printing layers can be safely removed with neutral water before recycling, and coloring of materials to be recycled can be prevented. When water-soluble polymers themselves are used for packaging container materials, the packaging container materials can be dissolved in water after use to be removed and recycled.

Meanwhile, in water-soluble polymers, achieving both water solubility and heat resistance has been impossible. Thus, to increase the heat resistance of polymer materials, the polymer materials are designed to suppress affinity with water and reduce the influence of water. Thus, for removal of such polymer materials, removal methods with a solvent other than water or by addition of a component other than water to water have been proposed (for example, JP-A-2018-24243 and JP-A-2017-114930).

### SUMMARY OF THE INVENTION

The present invention is a resin composition, including: a resin α1 having an aromatic dicarboxylic acid monomer unit A1 having a hydrophilic group, a dicarboxylic acid monomer unit B1 having no hydrophilic group, and an aromatic monomer unit C1; and a resin α2 having an aromatic dicarboxylic acid monomer unit A2 having a hydrophilic group, a dicarboxylic acid monomer unit B2 having no hydrophilic group, and an aliphatic monomer unit C2, wherein the resin α2 includes a monomer unit other than a monomer unit that constitutes the resin α1, and a mass ratio of a content of the resin α1 to a content of the resin α2 is 0.9 or more and 20 or less.

### MODE FOR CARRYING OUT THE INVENTION

In view of the above-mentioned current situation, the present inventors thought that a material that can be easily removed by water while maintaining the heat resistance can achieve both recycling and heat resistance of polymer materials.

The present invention provides a resin composition that can be easily removed only with water while maintaining the heat resistance.

The present invention is a resin composition, including: a resin α1 having an aromatic dicarboxylic acid monomer unit A1 having a hydrophilic group, a dicarboxylic acid monomer unit B1 having no hydrophilic group, and an aromatic monomer unit C1; and a resin α2 having an aromatic dicarboxylic acid monomer unit A2 having a hydrophilic group, a dicarboxylic acid monomer unit B2 having no hydrophilic group, and an aliphatic monomer unit C2, wherein the resin α2 includes a monomer unit other than a monomer unit that constitutes the resin α1, and a mass ratio of a content of the resin α1 to a content of the resin α2 is 0.9 or more and 20 or less.

According to the present invention, a resin composition that can be removed only with water while maintaining the heat resistance can be provided.

One embodiment of the present invention will be described below.

### <Resin composition>

The resin composition of the present embodiment includes a resin α1 having an aromatic dicarboxylic acid monomer unit A1 having a hydrophilic group other than a hydrophilic group that constitutes polymerization related to production of the resin (hereinafter, also simply referred to as a hydrophilic group), a dicarboxylic acid monomer unit B1 having no hydrophilic group, and an aromatic monomer unit C1; and a resin α2 having an aromatic dicarboxylic acid monomer unit A2 having a hydrophilic group, a dicarboxylic acid monomer unit B2 having no hydrophilic group, and an aliphatic monomer unit C2, the resin α2 includes a monomer unit other than a monomer unit that constitutes the resin α1, and a mass ratio of a content of the resin α1 to a content of the resin α2 is 0.9 or more and 20 or less. According to the resin composition of the present embodiment, a resin composition that can be removed only with water while maintaining the heat resistance can be provided. The reason why the resin composition exhibits such an effect is not clear, but is presumed as follows.

Because the resin α1 has the aromatic monomer unit C1, the mobility of the molecular chain is low. Thus, the resin α1 improves the heat resistance of the resin composition. However, the water solubility of the resin α1 is lower than that of the resin α2 having the aliphatic monomer unit C2. Generally, compatibility between a resin having low solubility in water and a resin having high solubility in water is low. However, the resin α1 and the resin α2 have a hydrophilic group, and thus presumably the compatibility is high due to the interaction between the hydrophilic group in one resin and the hydrophilic group that constitutes polymerization related to production of the other resin. Presumably, when the resin composition including such a resin α1 and such a resin α2 is brought into contact with water, the resin α2 is dissolved in water, so that the resin α1 that is sufficiently compatible with the resin α2 is easily dispersed in water. As a result, according to the resin composition of the present embodiment, a resin composition that can be removed only with water while maintaining the heat resistance derived from the resin α1 can be presumably provided.

### [Resin α1]

### [Aromatic dicarboxylic acid monomer unit A1]

The resin α1 has an aromatic dicarboxylic acid monomer unit having a hydrophilic group. In the present specification, the aromatic dicarboxylic acid monomer unit having a hydrophilic group of the resin α1 is referred to as an aromatic dicarboxylic acid monomer unit A1. The aromatic dicarboxylic acid from which the aromatic dicarboxylic acid monomer unit A1 is derived is referred to as an aromatic dicarboxylic acid A1.

Examples of the hydrophilic group include at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group from the viewpoint of securing compatibility with the resin α2. Among them, at least one selected from the group consisting of a quaternary ammonium base, an oxyalkylene group, a carboxylate group, a phosphate group, and a sulfonate group are preferable, at least one selected from the group consisting of a quaternary ammonium base, an oxyalkylene group, and a sulfonate group are more preferable, and a sulfonate group is still more preferable from the same viewpoint.

The sulfonate group is preferably a sulfonate group represented by -SO₃M (M represents a counterion of a sulfonic acid group that constitutes the sulfonate group, and from the viewpoint of securing compatibility with the resin α2, M is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably one or two selected from the group consisting of a sodium ion and a potassium ion, and still more preferably a sodium ion.) from the viewpoint of securing compatibility with the resin α2.

The content of the hydrophilic group in the resin α1 is preferably 0.5 mmol/g or more, more preferably 0.6 mmol/g or more, and still more preferably 0.7 mmol/g or more from the viewpoint of improving the compatibility with the resin α2, and is preferably 3.0 mmol/g or less, more preferably 2.0 mmol/g or less, and still more preferably 1.5 mmol/g or less from the viewpoint of maintaining the heat resistance and moisture resistance of the resin composition. The content of the hydrophilic group in the resin α1 is preferably 0.5 to 3.0 mmol/g, more preferably 0.6 to 2.0 mmol/g, and still more preferably 0.7 to 1.5 mmol/g from the viewpoint of improving the compatibility with the resin α2 and the viewpoint of maintaining the heat resistance and moisture resistance of the resin composition. In the present specification, the content of the hydrophilic group is measured by the method described in Examples.

The aromatic dicarboxylic acid A1 is preferably at least one selected from the group consisting of an aromatic dicarboxylic acid having a hydrophilic group, more preferably at least one selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, and still more preferably at least one selected from the group consisting of a sulfonate group-containing aromatic dicarboxylic acid from the viewpoint of improving the compatibility with the resin α2 and the viewpoint of maintaining the heat resistance of the resin composition. Among them, at least one selected from the group consisting of a sulfophthalic acid and sulfonaphthalenedicarboxylic acid are preferable, at least one selected from the group consisting of a sulfophthalic acid are more preferable, at least one selected from the group consisting of a sulfoisophthalic acid and a sulfoterephthalic acid are still more preferable, at least one selected from the group consisting of a sulfoisophthalic acid are still more preferable, and 5-sulfoisophthalic acid is still more preferable from the same viewpoint.

The percentage of the aromatic dicarboxylic acid monomer unit A1 based on a total of all monomer units of the resin α1 is preferably 10 mol% or more, more preferably 20 mol% or more, and still more preferably 25 mol% or more from the viewpoint of improving the compatibility with the resin α2, and is preferably 50 mol% or less, more preferably 45 mol% or less, and still more preferably 40 mol% or less from the viewpoint of maintaining the heat resistance of the resin composition. The percentage of the aromatic dicarboxylic acid monomer unit A1 based on a total of all monomer units of the resin α1 is preferably 10 to 50 mol%, more preferably 20 to 45 mol%, and still more preferably 25 to 40 mol% from the viewpoint of improving the compatibility with the resin α2 and the viewpoint of maintaining the heat resistance of the resin composition. In the present specification, the composition of monomer units in the resin is measured by the method described in Examples.

The percentage of the aromatic dicarboxylic acid monomer unit A1 based on a total of all dicarboxylic acid monomer units in the resin α1 is preferably 20 mol% or more, more preferably 40 mol% or more, and still more preferably 50 mol% or more from the viewpoint of improving the compatibility with the resin α2, and is preferably 90 mol% or less, more preferably 80 mol% or less, and still more preferably 70 mol% or less from the viewpoint of maintaining the heat resistance of the resin composition. The percentage of the aromatic dicarboxylic acid monomer unit A1 based on a total of all dicarboxylic acid monomer units in the resin α1 is preferably 20 to 90 mol%, more preferably 40 to 80 mol%, and still more preferably 50 to 70 mol% from the viewpoint of improving the compatibility with the resin α2 and the viewpoint of maintaining the heat resistance of the resin composition.

### [Dicarboxylic acid monomer unit B1]

The resin α1 has the dicarboxylic acid monomer unit having no hydrophilic group. In the present specification, the dicarboxylic acid monomer unit having no hydrophilic group of the resin α1 is referred to as a dicarboxylic acid monomer unit B1. The dicarboxylic acid from which the dicarboxylic acid monomer unit B1 is derived is referred to as a dicarboxylic acid B1.

The dicarboxylic acid B1 is preferably at least one selected from the group consisting of the aromatic dicarboxylic acid having no hydrophilic group and the aliphatic dicarboxylic acid having no hydrophilic group from the viewpoint of maintaining the heat resistance of the resin composition. Among them, from the same viewpoints, at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid are more preferable, at least one selected from the group consisting of terephthalic acid, 2,5-furandicarboxylic acid, and 2,6-naphthalenedicarboxylic acid are still more preferable, and 2,6-naphthalenedicarboxylic acid is still more preferable.

The percentage of the amount of substance of the dicarboxylic acid monomer unit B1 based on a total of the amount of substance of all monomer units in the resin α1 is preferably 5 mol% or more, more preferably 10 mol% or more, and still more preferably 15 mol% or more from the viewpoint of maintaining the heat resistance of the resin composition, and is preferably 45 mol% or less, more preferably 30 mol% or less, and still more preferably 20 mol% or less from the viewpoint of improving the compatibility with the resin α2. The percentage of the amount of substance of the monomer unit B1 based on a total of the amount of substance of all monomer units in the resin α1 is preferably 5 to 45 mol%, more preferably 10 to 30 mol%, and still more preferably 15 to 20 mol% from the viewpoint of maintaining the heat resistance of the resin composition and the viewpoint of improving the compatibility with the resin α2.

The percentage of the dicarboxylic acid monomer unit B1 based on a total of all dicarboxylic acid monomer units in the resin α1 is preferably 10 mol% or more, more preferably 20 mol% or more, and still more preferably 30 mol% or more from the viewpoint of maintaining the heat resistance of the resin composition, and is preferably 90 mol% or less, more preferably 60 mol% or less, and still more preferably 40 mol% or less from the viewpoint of improving the compatibility with the resin α2. The percentage of the dicarboxylic acid monomer unit B1 based on a total of all dicarboxylic acid monomer units in the resin α1 is preferably 10 to 90 mol%, more preferably 20 to 60 mol%, and still more preferably 30 to 40 mol% from the viewpoint of maintaining the heat resistance of the resin composition and the viewpoint of improving the compatibility with the resin α2.

The molar ratio of the aromatic dicarboxylic acid monomer unit A1 to the dicarboxylic acid monomer unit B1 in the resin α1 (the aromatic dicarboxylic acid monomer unit A1/ the dicarboxylic acid monomer unit B1) is preferably 20/80 or more, more preferably 40/60 or more, and still more preferably 50/50 or more from the viewpoint of improving the compatibility with the resin α2, and is preferably 90/10 or less, more preferably 80/20 or less, and still more preferably 70/30 or less from the viewpoint of maintaining the heat resistance of the resin composition.

### [Aromatic monomer unit C1]

The resin α1 has an aromatic monomer unit derived from an aromatic monomer having two functional groups that are reactive with a carboxy group. In the present specification, an aromatic monomer having two functional groups that are reactive with a carboxy group is referred to as an aromatic monomer C1, and an aromatic monomer unit derived from the aromatic monomer C1 is referred to as an aromatic monomer unit C1.

The carbon number of the aromatic monomer C1 is preferably 10 or more, more preferably 20 or more, and still more preferably 25 or more from the viewpoint of maintaining the heat resistance of the resin composition, and is preferably 40 or less, more preferably 38 or less, and still more preferably 35 or less from the same viewpoint.

The aromatic monomer C1 is preferably at least one selected from the group consisting of an aromatic diol, an aromatic diamine, and an aromatic alkanolamine, more preferably at least one selected from the group consisting of an aromatic diol, still more preferably at least one selected from the group consisting of bisphenoxyethanolfluorene, bisphenolfluorene, biscresoxyethanolfluorene, and biscresolfluorene, and still more preferably bisphenoxyethanolfluorene from the viewpoint of improving the heat resistance of the resin composition.

The percentage of the amount of substance of the aromatic monomer unit C1 based on a total of the amount of substance of all monomer units in the resin α1 is preferably 5 mol% or more, more preferably 40 mol% or more, and still more preferably 45 mol% or more from the viewpoint of maintaining the heat resistance of the resin composition, and is preferably 70 mol% or less, more preferably 60 mol% or less, and still more preferably 55 mol% or less from the viewpoint of securing the moisture resistance of the resin composition. The percentage of the amount of substance of the aromatic monomer unit C1 based on a total of the amount of substance of all monomer units in the resin α1 is preferably 5 to 70 mol%, more preferably 40 to 60 mol%, and still more preferably 45 to 55 mol% from the viewpoint of maintaining the heat resistance and moisture resistance of the resin composition.

### [Other monomer units]

The resin α1 can have other monomer units other than the aromatic dicarboxylic acid monomer unit A1, the dicarboxylic acid monomer unit B1, and the aromatic monomer unit C1 as long as the effects of the present embodiment are not impaired. As an example of the other monomer units, an aliphatic monomer unit C2 described later is preferable.

The percentage of the aromatic monomer unit C1 based on a total of all monomer units derived from a monomer having two functional groups that are reactive with a carboxy group in the resin α1 is preferably 25 mol% or more, more preferably 50 mol% or more, still more preferably 80 mol% or more, and still more preferably 90 mol% or more from the viewpoint of improving the heat resistance of the resin composition, and is preferably 100 mol% or less, and more preferably 99 mol% or less from the viewpoint of imparting solubility in water to the resin composition. The percentage of the aromatic monomer unit C1 based on a total of all monomer units derived from a monomer having two functional groups that are reactive with a carboxy group in the resin α1 is preferably 25 to 100 mol%, more preferably 50 to 100 mol%, still more preferably 80 to 100 mol%, and still more preferably 90 to 99 mol% from the viewpoint of improving the heat resistance of the resin composition and the viewpoint of imparting solubility in water to the resin composition.

The resin α1 is a polyester, a polyamide, or a polyesteramide, and is preferably a polyester. Examples of the resin α1 include a resin having a unit represented by the following General Formula (1) and a unit represented by the following General Formula (2).

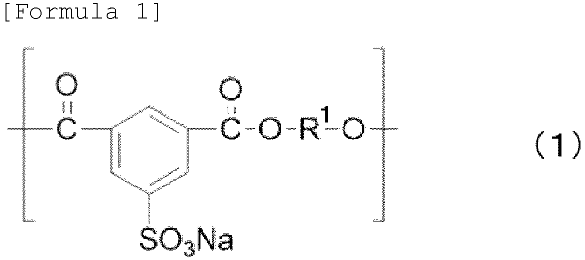

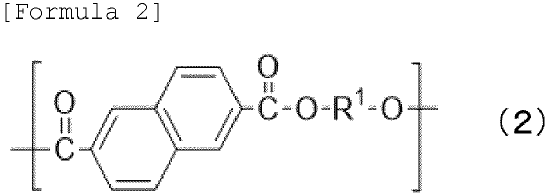

In the General Formulae (1) and (2), R¹ is represented by the following General Formula (3) or (4), and units of the General Formulae (1) and (2) are bonded in a block bond or a random bond, and preferably bonded in a random bond. 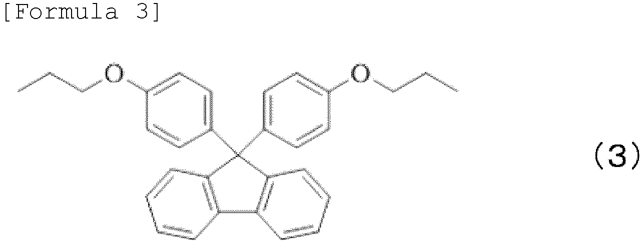 -CH₂CH₂- (4)

The weight average molecular weight of the resin α1 is preferably 1,000 or more, more preferably 10,000 or more, and still more preferably 20,000 or more from the viewpoint of maintaining the heat resistance of the resin composition, and is preferably 80,000 or less, more preferably 50,000 or less, still more preferably 40,000 or less, and still more preferably 30,000 or less from the viewpoint of imparting solubility in water to the resin composition. In the present specification, the weight average molecular weight is measured by the method described in Examples.

The content of the resin α1 in the resin composition is preferably 40% by mass or more, more preferably 60% by mass or more, and still more preferably 80% by mass or more from the viewpoint of improving the heat resistance of the resin composition, and is preferably 90% by mass or less, more preferably 85% by mass or less, still more preferably 70% by mass or less, and still more preferably 50% by mass or less from the viewpoint of imparting solubility in water. The content of the resin α1 in the resin composition is preferably 40 to 90% by mass, more preferably 60 to 90% by mass, and still more preferably 60 to 85% by mass from the viewpoint of improving the heat resistance of the resin composition and the viewpoint of imparting solubility in water.

The method for producing the resin α1 is not particularly limited, and a conventionally known method can be applied.

### [Resin α2]

### [Aromatic dicarboxylic acid monomer unit A2]

The resin α2 has the aromatic dicarboxylic acid monomer unit. In the present specification, the aromatic dicarboxylic acid monomer unit having a hydrophilic group of the resin α2 is referred to as an aromatic dicarboxylic acid monomer unit A2. The aromatic dicarboxylic acid from which the aromatic dicarboxylic acid monomer unit A2 is derived is referred to as an aromatic dicarboxylic acid A2.

A preferable aspect of the aromatic dicarboxylic acid monomer unit A2 is the same as that of the aromatic dicarboxylic acid monomer unit A1, and from the viewpoint of securing compatibility of the resin α2 with the resin α1, the aromatic dicarboxylic acid monomer unit A2 is preferably the same as the aromatic dicarboxylic acid monomer unit A1.

The content of the hydrophilic group in the resin α2 is preferably 0.5 mmol/g or more, more preferably 0.6 mmol/g or more, and still more preferably 0.7 mmol/g or more from the viewpoint of imparting solubility in water to the resin composition, and is preferably 3.0 mmol/g or less, more preferably 2.0 mmol/g or less, and still more preferably 1.5 mmol/g or less from the viewpoint of maintaining the heat resistance and moisture resistance of the resin composition. The content of the hydrophilic group in the resin α2 is preferably 0.5 to 3.0 mmol/g, more preferably 0.6 to 2.0 mmol/g, and still more preferably 0.7 to 1.5 mmol/g from the viewpoint of imparting solubility in water to the resin composition and the viewpoint of maintaining the heat resistance and moisture resistance of the resin composition.

The percentage of the aromatic dicarboxylic acid monomer unit A2 based on a total of all monomer units of the resin α2 is preferably 5 mol% or more, more preferably 8 mol% or more, and still more preferably 10 mol% or more from the viewpoint of imparting solubility in water to the resin composition, and is preferably 35 mol% or less, more preferably 30 mol% or less, still more preferably 20 mol% or less, and still more preferably 15 mol% or less from the viewpoint of maintaining the heat resistance of the resin composition. The percentage of the aromatic dicarboxylic acid monomer unit A2 based on a total of all monomer units of the resin α2 is preferably 5 to 35 mol%, more preferably 8 to 30 mol%, still more preferably 10 to 20 mol%, and still more preferably 10 to 15 mol% from the viewpoint of imparting solubility in water to the resin composition and the viewpoint of maintaining the heat resistance of the resin composition.

The percentage of the aromatic dicarboxylic acid monomer unit A2 based on a total of all dicarboxylic acid monomer units in the resin α2 is preferably 10 mol% or more, more preferably 15 mol% or more, and still more preferably 20 mol% or more from the viewpoint of imparting solubility in water to the resin composition, and is preferably 70 mol% or less, more preferably 60 mol% or less, still more preferably 40 mol% or less, and still more preferably 30 mol% or less from the viewpoint of maintaining the heat resistance of the resin composition. The percentage of the aromatic dicarboxylic acid monomer unit A2 based on a total of all dicarboxylic acid monomer units in the resin α2 is preferably 10 to 70 mol%, more preferably 15 to 60 mol%, still more preferably 20 to 40 mol%, and still more preferably 20 to 30 mol% from the viewpoint of imparting solubility in water to the resin composition and the viewpoint of maintaining the heat resistance of the resin composition.

### [Dicarboxylic acid monomer unit B2]

The resin α2 has the dicarboxylic acid monomer unit having no hydrophilic group. In the present specification, the dicarboxylic acid monomer unit having no hydrophilic group of the resin α2 is referred to as a dicarboxylic acid monomer unit B2. The dicarboxylic acid from which the dicarboxylic acid monomer unit B2 is derived is referred to as a dicarboxylic acid B2.

A preferable aspect of the dicarboxylic acid monomer unit B2 is the same as that of the dicarboxylic acid monomer unit B1, and from the viewpoint of securing compatibility of the resin α2 with the resin α1, the dicarboxylic acid monomer unit B2 is preferably the same as the dicarboxylic acid monomer unit B1.

The percentage of the amount of substance of the dicarboxylic acid monomer unit B2 based on a total of the amount of substance of all monomer units in the resin α2 is preferably 15 mol% or more, more preferably 25 mol% or more, and still more preferably 30 mol% or more from the viewpoint of maintaining the heat resistance of the resin composition, and is preferably 45 mol% or less, more preferably 42 mol% or less, and still more preferably 40 mol% or less from the viewpoint of imparting solubility in water to the resin composition. The percentage of the amount of substance of the monomer unit B2 based on a total of the amount of substance of all monomer units in the resin α2 is preferably 15 to 45 mol%, more preferably 25 to 42 mol%, and still more preferably 30 to 40 mol% from the viewpoint of maintaining the heat resistance of the resin composition and the viewpoint of imparting solubility in water to the resin composition.

The molar ratio of the aromatic dicarboxylic acid monomer unit A2 to the dicarboxylic acid monomer unit B2 in the resin α2 (the aromatic dicarboxylic acid monomer unit A2/the dicarboxylic acid monomer unit B2) is preferably 10/90 or more, more preferably 15/85 or more, still more preferably 18/82 or more, and still more preferably 20/80 or more from the viewpoint of imparting solubility in water to the resin composition and the viewpoint of suppressing a decrease in moisture resistance of the resin composition, and is preferably 70/30 or less, more preferably 65/35 or less, still more preferably 60/40 or less, still more preferably 40/60 or less, and still more preferably 30/70 or less from the same viewpoint.

### [Aliphatic monomer unit C2]

The resin α2 has an aliphatic monomer unit derived from an aliphatic monomer having two functional groups that are reactive with a carboxy group. In the present specification, an aliphatic monomer having two functional groups that are reactive with a carboxy group is referred to as an aliphatic monomer C2, and an aliphatic monomer unit derived from the aliphatic monomer C2 is referred to as an aliphatic monomer unit C2. The aliphatic monomer C2 is preferably at least one selected from the group consisting of an aliphatic diol, an aliphatic diamine, and an aliphatic alkanolamine, and is more preferably one or two selected from the group consisting of an aliphatic diol.

The carbon number of the aliphatic diol is preferably 2 or more from the viewpoint of imparting solubility in water to the resin composition and the viewpoint of maintaining the heat resistance of the resin composition, and is preferably 31 or less, more preferably 25 or less, still more preferably 20 or less, and still more preferably 15 or less from the same viewpoint.

Examples of the aliphatic diol include at least one selected from the group consisting of a chain diol and a cyclic diol, and from the viewpoint of imparting solubility in water to the resin composition and the viewpoint of maintaining the heat resistance of the resin composition, at least one selected from the group consisting of a chain diol is preferable.

The carbon number of the chain diol is preferably 2 or more from the viewpoint of imparting solubility in water to the resin composition and the viewpoint of maintaining the heat resistance of the resin composition, and is preferably 6 or less, more preferably 4 or less, still more preferably 3 or less, and still more preferably 2 from the same viewpoint.

Though the aliphatic diol can have an ether oxygen, when the aliphatic diol is a chain aliphatic diol, the number of the ether oxygen is preferably 1 or less from the viewpoint of imparting solubility in water to the resin composition and the viewpoint of maintaining the heat resistance of the resin composition, and when the aliphatic diol is a cyclic aliphatic diol, the number of the ether oxygen is preferably 2 or less from the same viewpoint.

The chain diol is preferably at least one selected from the group consisting of ethylene glycol, 1,2-propanediol, 1,3-propanediol, diethylene glycol, and dipropylene glycol, more preferably at least one selected from the group consisting of ethylene glycol, 1,2-propanediol, and 1,3-propanediol, and still more preferably ethylene glycol from the viewpoint of imparting solubility in water to the resin composition and the viewpoint of maintaining the heat resistance of the resin composition.

The percentage of the amount of substance of the aliphatic monomer unit C2 based on a total of the amount of substance of all monomer units in the resin α2 is preferably 30 mol% or more, more preferably 40 mol% or more, and still more preferably 45 mol% or more from the viewpoint of maintaining the heat resistance of the resin composition, and is preferably 70 mol% or less, more preferably 60 mol% or less, and still more preferably 55 mol% or less from the viewpoint of imparting solubility in water to the resin composition. The percentage of the amount of substance of the aliphatic monomer unit C2 based on a total of the amount of substance of all monomer units in the resin α2 is preferably 30 to 70 mol%, more preferably 40 to 60 mol%, and still more preferably 45 to 55 mol% from the viewpoint of maintaining the heat resistance of the resin composition and the viewpoint of imparting solubility in water to the resin composition.

The resin α2 includes a monomer unit other than a monomer unit that constitutes the resin α1.

### [Other monomer units]

The resin α2 can have other monomer units other than the aromatic dicarboxylic acid monomer unit A2, the dicarboxylic acid monomer unit B2, and the aliphatic monomer unit C2 as long as the effects of the present embodiment are not impaired.

The percentage of the aliphatic monomer unit C2 based on a total of all monomer units derived from a monomer having two functional groups that are reactive with a carboxy group in the resin α2 is preferably 50 mol% or more, more preferably 80 mol% or more, and still more preferably 90 mol% or more, and can be 100 mol% from the viewpoint of imparting solubility in water to the resin composition.

The resin α2 is a polyester, a polyamide, or a polyesteramide, and is preferably a polyester. Examples of the resin α2 include a resin having a unit represented by the following General Formula (5) and a unit represented by the following General Formula (6).

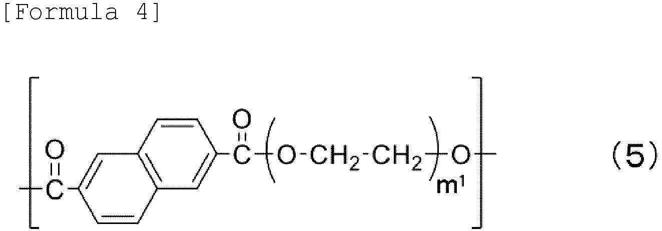

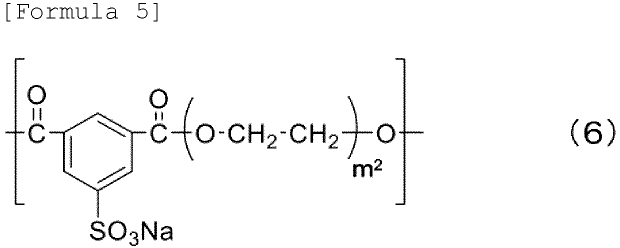

In the General Formulae (5) and (6), m¹ and m² represent the average number of moles of ethylene glycol monomer units added, and are each 1 to 3, and preferably 1, and units of the General Formulae (5) and (6) are bonded in a block bond or a random bond, and preferably bonded in a random bond.

The weight average molecular weight of the resin α2 is preferably 5,000 or more, more preferably 10,000 or more, and still more preferably 11,000 or more from the viewpoint of maintaining the heat resistance of the resin composition, and is preferably 60,000 or less, more preferably 50,000 or less, still more preferably 40,000 or less, still more preferably 30,000 or less, and still more preferably 20,000 or less from the viewpoint of imparting solubility in water to the resin composition.

The content of the resin α2 in the resin composition is preferably 1% by mass or more, more preferably 5% by mass or more, still more preferably 15% by mass or more, still more preferably 30% by mass or more, and still more preferably 40% by mass or more from the viewpoint of imparting solubility in water to the resin composition, and is preferably 50% by mass or less, more preferably 40% by mass or less, still more preferably 30% by mass or less, still more preferably 20% by mass or less, still more preferably 10% by mass or less, and still more preferably 5% by mass or less from the viewpoint of maintaining the heat resistance of the resin composition. The content of the resin α2 in the resin composition is preferably 1 to 50% by mass, more preferably 5 to 40% by mass, and still more preferably 15 to 30% by mass from the viewpoint of imparting solubility in water to the resin composition and the viewpoint of maintaining the heat resistance of the resin composition.

The method for producing the resin α2 is not particularly limited, and a conventionally known method can be applied.

The resin composition can include other components as long as the effects of the present embodiment are not impaired. Examples of the other components include polymers other than the resin α1 and the resin α2, plasticizers such as benzoic acid polyalkylene glycol diester, fillers such as calcium carbonate, magnesium carbonate, glass spheres, graphite, carbon black, carbon fiber, glass fiber, talc, wollastonite, mica, alumina, silica, kaolin, whisker, and silicon carbide, compatibilizers, and elastomers. Examples of the compatibilizer include the following organic salt compound β.

### [Organic salt compound β]

The resin composition can include an organic salt compound represented by the following General Formula (7) from the viewpoint of compatibilization between the resin α1 and the resin α2. In the present specification, the organic salt compound represented by the following General Formula (7) is referred to as an organic salt compound β.

(R²-SO₃⁻)ₙXⁿ⁺ (7)

(In the General Formula (7), R² represents a hydrocarbon group optionally having a substituent and having 1 to 30 carbon atoms, n represents a number of 1 or 2, Xⁿ⁺ represents a sodium ion, a potassium ion, a lithium ion, an ammonium ion, or a phosphonium ion when n is 1, and Xⁿ⁺ represents a magnesium ion, a calcium ion, a barium ion, or a zinc ion when n is 2.)

In the General Formula (7), R² represents a hydrocarbon group optionally having a substituent and having 1 to 30 carbon atoms and from the viewpoint of molecular weight control during production of the resin composition and the viewpoint of securing solubility in neutral water and moisture absorption resistance. The hydrocarbon group can be any of an aliphatic hydrocarbon group, an alicyclic hydrocarbon group, and an aromatic hydrocarbon group. When the hydrocarbon group is an aliphatic hydrocarbon group, the carbon number of the hydrocarbon group is preferably 1 or more, more preferably 4 or more, still more preferably 8 or more, and preferably 30 or less, more preferably 25 or less, still more preferably 20 or less from the viewpoint of molecular weight control during production of the resin composition and the viewpoint of securing solubility in neutral water and moisture absorption resistance. When the hydrocarbon group is an alicyclic hydrocarbon group, the carbon number of the hydrocarbon group is preferably 3 or more, more preferably 5 or more, still more preferably 6 or more, still more preferably 10 or more, and preferably 30 or less, more preferably 25 or less, still more preferably 20 or less from the viewpoint of molecular weight control during production of the resin composition and the viewpoint of securing solubility in neutral water and moisture absorption resistance. When the hydrocarbon group is an aromatic hydrocarbon group, the carbon number of the hydrocarbon group is preferably 6 or more, more preferably 8 or more, still more preferably 10 or more, and preferably 30 or less, more preferably 25 or less from the viewpoint of molecular weight control during production of the resin composition and the viewpoint of securing solubility in neutral water and moisture absorption resistance.

As the substituent, a substituent including at least one selected from the group consisting of a hydrogen atoms, a carbon atom, an oxygen atom, a nitrogen atom, a sulfur atom, a phosphorus atom, a silicon atom, and a halogen atom is preferable, among them, a hydrocarbon group having 1 to 22 carbon atoms or an alkyl halide group is preferable, a hydrocarbon group having 1 to 16 carbon atoms or an alkyl halide group is more preferable, a hydrocarbon group having 1 to 12 carbon atoms or an alkyl halide group is still more preferable, and a hydrocarbon group having 1 to 12 carbon atoms is still more preferable from the viewpoint of molecular weight control during production of the resin composition and the viewpoint of securing solubility in neutral water and moisture absorption resistance.

In the General Formula (7), Xⁿ⁺ represents a sodium ion, a potassium ion, a lithium ion, an ammonium ion, a phosphonium ion, a magnesium ion, a calcium ion, a barium ion, a zinc ion, or a phosphonium ion, a sodium ion, a potassium ion, a lithium ion, a magnesium ion, an ammonium ion, or a phosphonium ion is preferable, a sodium ion, a lithium ion, an ammonium ion, or a phosphonium ion is more preferable, a lithium ion or a phosphonium ion is still more preferable, a phosphonium ion is still more preferable from the viewpoint of molecular weight control during production of the resin composition and the viewpoint of securing solubility in neutral water and moisture absorption resistance. Among phosphonium ions, a tetraalkylphosphonium ion is preferable, and a tetrabutylphosphonium ion is more preferable from the viewpoint of securing the heat resistance required during production of the resin composition.

In the General Formula (7), n is preferably 1 from the viewpoint of molecular weight control during production of the resin composition, the viewpoint of solubility in neutral water, and the viewpoint of securing moisture absorption resistance.

The content of the organic salt compound β in the resin composition is preferably 0.1% by mass or more, more preferably 1% by mass or more, and still more preferably 5% by mass or more from the viewpoint of compatibilization between the resin α1 and the resin α2, and is preferably 20% by mass or less, more preferably 15% by mass or less, and still more preferably 10% by mass or less from the viewpoint of maintaining the heat resistance of the resin composition. The content of the organic salt compound β in the resin composition is preferably 0.1 to 20% by mass, more preferably 1 to 15% by mass, and still more preferably 5 to 10% by mass from the viewpoint of compatibilization between the resin α1 and the resin α2 and the viewpoint of maintaining the heat resistance of the resin composition.

The ratio of the amount of substance (mol) of alkyl sulfonic acid ions (R²-SO₃⁻) of the organic salt compound β to a total of the amount of substance of hydrophilic groups of the resin α1 and the amount of substance of hydrophilic groups of the resin α2 (the amount of substance of alkyl sulfonic acid ions of the organic salt compound β/ a total of the amount of substance of hydrophilic groups of the resin α1 and the amount of substance of hydrophilic groups of the resin α2) is preferably 0.01 or more, more preferably 0.05 or more, and still more preferably 0.1 or more from the viewpoint of compatibilization between the resin α1 and the resin α2, and is preferably 0.5 or less, more preferably 0.2 or less, and still more preferably 0.15 or less from the viewpoint of maintaining the heat resistance of the resin composition and suppressing the bleedout of the organic salt compound.

The mass ratio of the content of the resin α1 to the content of the resin α2 in the resin composition (mass of the resin α1/mass of the resin α2) is preferably 0.9 or more, more preferably 2 or more, and still more preferably 8 or more from the viewpoint of maintaining the heat resistance of the resin composition, and is preferably 20 or less, more preferably 10 or less, still more preferably 3 or less, and still more preferably 1 or less from the viewpoint of imparting solubility in water to the resin composition.

The glass transition temperature (Tg) of the resin composition is preferably 50°C or more, more preferably 100°C or more, and still more preferably 150°C or more from the viewpoint of ease of use of the resin composition under high temperature conditions, and is preferably 250°C or less, more preferably 220°C or less, and still more preferably 210°C or less from the same viewpoint. In the present specification, the glass transition temperature is measured by the method described in EXAMPLES.

The method for producing the resin composition is not particularly limited, and the resin composition can be produced by a known method. Examples of the method for producing the resin composition include a method for producing the resin composition by kneading raw materials with a kneader such as a batch-type kneader and a twinscrew extruder.

The resin composition can be used as a material of a support material in a method for producing a three-dimensional object by a fused deposition modeling system including the steps of obtaining a three-dimensional object precursor including a three-dimensional object and a support material; and removing the support material by bringing the three-dimensional object precursor into contact with neutral water.

Regarding the above-mentioned embodiments, the present invention further discloses the following composition and the like.

<1> A resin composition, including: a resin α1 having an aromatic dicarboxylic acid monomer unit A1 having a hydrophilic group, a dicarboxylic acid monomer unit B1 having no hydrophilic group, and an aromatic monomer unit C1; and a resin α2 having an aromatic dicarboxylic acid monomer unit A2 having a hydrophilic group, a dicarboxylic acid monomer unit B2 having no hydrophilic group, and an aliphatic monomer unit C2, wherein the resin α2 includes a monomer unit other than a monomer unit that constitutes the resin α1, and a mass ratio of a content of the resin α1 to a content of the resin α2 is 0.9 or more and 20 or less.
<2> The resin composition according to <1> above, wherein a mass ratio of a content of the resin α1 to a content of the resin α2 in the resin composition is preferably 2 or more, and more preferably 8 or more.
<3> The resin composition according to <1> or <2> above, wherein a mass ratio of a content of the resin α1 to a content of the resin α2 in the resin composition is preferably 10 or less, more preferably 3 or less, and still more preferably 1 or less.
<4> The resin composition according to any one of <1> to <3> above, wherein an amount of substance (mol) of alkyl sulfonic acid ions (R²-SO₃⁻) of the organic salt compound β to a total of an amount of substance of hydrophilic groups of the resin α1 and an amount of substance of hydrophilic groups of the resin α2 is preferably 0.01 or more, more preferably 0.05 or more, and still more preferably 0.1 or more.
<5> The resin composition according to any one of <1> to <4> above, wherein an amount of substance (mol) of alkyl sulfonic acid ions (R²-SO₃⁻) of the organic salt compound β to a total of an amount of substance of hydrophilic groups of the resin α1 and an amount of substance of hydrophilic groups of the resin α2 is preferably 0.5 or less, more preferably 0.2 or less, and still more preferably 0.15 or less.
<6> The resin composition according to any one of <1> to <5> above, wherein a content of the resin α1 in the resin composition is preferably 40% by mass or more, more preferably 60% by mass or more, and still more preferably 80% by mass or more.
<7> The resin composition according to any one of <1> to <6> above, wherein a content of the resin α1 in the resin composition is preferably 90% by mass or less, more preferably 85% by mass or less, still more preferably 70% by mass or less, and still more preferably 50% by mass or less.
<8> The resin composition according to any one of <1> to <5> above, wherein a content of the resin α1 in the resin composition is preferably 40 to 90% by mass, more preferably 60 to 90% by mass, and still more preferably 60 to 85% by mass.
<9> The resin composition according to any one of <1> to <8> above, wherein a content of the resin α2 in the resin composition is preferably 1% by mass or more, more preferably 5% by mass or more, still more preferably 15% by mass or more, still more preferably 30% by mass or more, and still more preferably 40% by mass or more.
<10> The resin composition according to any one of <1> to <9> above, wherein a content of the resin α2 in the resin composition is preferably 50% by mass or less, more preferably 40% by mass or less, still more preferably 30% by mass or less, still more preferably 20% by mass or less, still more preferably 10% by mass or less, and still more preferably 5% by mass or less.
<11> The resin composition according to any one of <1> to <8> above, wherein a content of the resin α2 in the resin composition is preferably 1 to 50% by mass, more preferably 5 to 40% by mass, and still more preferably 15 to 30% by mass.
<12> The resin composition according to any one of <1> to <11> above, wherein a percentage of the aromatic monomer unit C1 based on a total of all monomer units derived from a monomer having two functional groups that are reactive with a carboxy group in the resin α1 is preferably 25 mol% or more, more preferably 50 mol% or more, still more preferably 80 mol% or more, and still more preferably 90 mol% or more.
<13> The resin composition according to any one of <1> to <12> above, wherein a percentage of the aromatic monomer unit C1 based on a total of all monomer units derived from a monomer having two functional groups that are reactive with a carboxy group in the resin α1 is preferably 100 mol% or less, and more preferably 99 mol% or less.
<14> The resin composition according to any one of <1> to <11> above, wherein a percentage of the aromatic monomer unit C1 based on a total of all monomer units derived from a monomer having two functional groups that are reactive with a carboxy group in the resin α1 is preferably 25 to 100 mol%, more preferably 50 to 100 mol%, still more preferably 80 to 100 mol%, and still more preferably 90 to 99 mol%.
<15> The resin composition according to any one of <1> to <14> above, wherein a molar ratio of the aromatic dicarboxylic acid monomer unit A1 to the dicarboxylic acid monomer unit B1 in the resin α1 is preferably 20/80 or more, more preferably 40/60 or more, and still more preferably 50/50 or more.
<16> The resin composition according to any one of <1> to <15> above, wherein a molar ratio of the aromatic dicarboxylic acid monomer unit A1 to the dicarboxylic acid monomer unit B1 in the resin α1 is preferably 90/10 or less, more preferably 80/20 or less, and still more preferably 70/30 or less.
<17> The resin composition according to any one of <1> to <16> above, wherein a molar ratio of the aromatic dicarboxylic acid monomer unit A2 to the dicarboxylic acid monomer unit B2 in the resin α2 is preferably 10/90 or more, more preferably 15/85 or more, still more preferably 18/82 or more, and still more preferably 20/80 or more.
<18> The resin composition according to any one of <1> to <17> above, wherein a molar ratio of the aromatic dicarboxylic acid monomer unit A2 to the dicarboxylic acid monomer unit B2 in the resin α2 is preferably 70/30 or less, more preferably 65/35 or less, still more preferably 60/40 or less, still more preferably 40/60 or less, and still more preferably 30/70 or less.
<19> The resin composition according to any one of <1> to <18> above, including an organic salt compound β represented by General Formula (7) below:

   (R²-SO₃⁻)ₙXⁿ⁺ (7)

   (In the General Formula (7), R² represents a hydrocarbon group optionally having a substituent and having 1 to 30 carbon atoms, n represents a number of 1 or 2, Xⁿ⁺ represents a sodium ion, a potassium ion, a lithium ion, an ammonium ion, or a phosphonium ion when n is 1, and Xⁿ⁺ represents a magnesium ion, a calcium ion, a barium ion, or a zinc ion when n is 2.).
<20> The resin composition according to any one of <1> to <19> above, wherein a percentage of the monomer unit A1 based on a total of all dicarboxylic acid monomer units in the resin α1 is preferably 20 mol% or more, more preferably 40 mol% or more, and still more preferably 50 mol% or more.
<21> The resin composition according to any one of <1> to <20> above, wherein a percentage of the monomer unit A1 based on a total of all dicarboxylic acid monomer units in the resin α1 is preferably 90 mol% or less, more preferably 80 mol% or less, and still more preferably 70 mol% or less.
<22> The resin composition according to any one of <1> to <19> above, wherein a percentage of the monomer unit A1 based on a total of all dicarboxylic acid monomer units in the resin α1 is preferably 20 to 90 mol%, more preferably 40 to 80 mol%, and still more preferably 50 to 70 mol%.
<23> The resin composition according to any one of <1> to <22> above, wherein a percentage of the aromatic dicarboxylic acid monomer unit A1 based on a total of all monomer units of the resin α1 is preferably 10 mol% or more, more preferably 20 mol% or more, and still more preferably 25 mol% or more.
<24> The resin composition according to any one of <1> to <23> above, wherein a percentage of the aromatic dicarboxylic acid monomer unit A1 based on a total of all monomer units of the resin α1 is preferably 50 mol% or less, more preferably 45 mol% or less, and still more preferably 40 mol% or less.
<25> The resin composition according to any one of <1> to <22> above, wherein a percentage of the aromatic dicarboxylic acid monomer unit A1 based on a total of all monomer units of the resin α1 is preferably 10 to 50 mol%, more preferably 20 to 45 mol%, and still more preferably 25 to 40 mol%.
<26> The resin composition according to any one of <1> to <25> above, wherein a percentage of the aromatic dicarboxylic acid monomer unit A2 based on a total of all dicarboxylic acid monomer units in the resin α2 is preferably 10 mol% or more, more preferably 15 mol% or more, and still more preferably 20 mol% or more.
<27> The resin composition according to any one of <1> to <26> above, wherein a percentage of the aromatic dicarboxylic acid monomer unit A2 based on a total of all dicarboxylic acid monomer units in the resin α2 is preferably 70 mol% or less, more preferably 60 mol% or less, still more preferably 40 mol% or less, and still more preferably 30 mol% or less.
<28> The resin composition according to any one of <1> to <25> above, wherein a percentage of the aromatic dicarboxylic acid monomer unit A2 based on a total of all dicarboxylic acid monomer units in the resin α2 is preferably 10 to 70 mol%, more preferably 15 to 60 mol%, still more preferably 20 to 40 mol%, and still more preferably 20 to 30 mol%.
<29> The resin composition according to any one of <1> to <28> above, wherein a percentage of the aromatic dicarboxylic acid monomer unit A2 based on a total of all monomer units of the resin α2 is preferably 5 mol% or more, more preferably 8 mol% or more, and still more preferably 10 mol% or more.
<30> The resin composition according to any one of <1> to <29> above, wherein a percentage of the aromatic dicarboxylic acid monomer unit A2 based on a total of all monomer units of the resin α2 is preferably 35 mol% or less, more preferably 30 mol% or less, still more preferably 20 mol% or less, and still more preferably 15 mol% or less.
<31> The resin composition according to any one of <1> to <28> above, wherein a percentage of the aromatic dicarboxylic acid monomer unit A2 based on a total of all monomer units of the resin α2 is preferably 5 to 35 mol%, more preferably 8 to 30 mol%, still more preferably 10 to 20 mol%, and still more preferably 10 to 15 mol%.
<32> The resin composition according to any one of <1> to <31> above, wherein a content of the hydrophilic group in the resin α1 is preferably 0.5 mmol/g or more, more preferably 0.6 mmol/g or more, and still more preferably 0.7 mmol/g or more.
<33> The resin composition according to any one of <1> to <32> above, wherein a content of the hydrophilic group in the resin α1 is preferably 3.0 mmol/g, more preferably 2.0 mmol/g or less, and still more preferably 1.5 mmol/g or less.
<34> The resin composition according to any one of <1> to <31> above, wherein a content of the hydrophilic group in the resin α1 is preferably 0.5 to 3 mmol/g, more preferably 0.6 to 2 mmol/g, and still more preferably 0.7 to 1.5 mmol/g.
<35> The resin composition according to any one of <1> to <34> above, wherein a content of the hydrophilic group in the resin α2 is preferably 0.5 mmol/g or more, more preferably 0.6 mmol/g or more, and still more preferably 0.7 mmol/g or more.
<36> The resin composition according to any one of <1> to <35> above, wherein a content of the hydrophilic group in the resin α2 is preferably 3.0 mmol/g, more preferably 2.0 mmol/g or less, and still more preferably 1.5 mmol/g or less.
<37> The resin composition according to any one of <1> to <34> above, wherein a content of the hydrophilic group in the resin α2 is preferably 0.5 to 3.0 mmol/g, more preferably 0.6 to 2.0 mmol/g, and still more preferably 0.7 to 1.5 mmol/g.
<38> The resin composition according to any one of <1> to <37> above, wherein a weight average molecular weight of the resin α1 is preferably 1,000 or more, more preferably 10,000 or more, and still more preferably 20,000 or more.
<39> The resin composition according to any one of <1> to <38> above, wherein a weight average molecular weight of the resin α1 is preferably 80,000, more preferably 50,000 or less, still more preferably 40,000 or less, and still more preferably 30,000 or less.
<40> The resin composition according to any one of <1> to <39> above, wherein a weight average molecular weight of the resin α2 is preferably 5,000 or more, more preferably 10,000 or more, and still more preferably 11,000 or more.
<41> The resin composition according to any one of <1> to <40> above, wherein a weight average molecular weight of the resin α2 is preferably 60,000 or less, more preferably 50,000 or less, still more preferably 40,000 or less, still more preferably 30,000 or less, and still more preferably 20,000 or less.
<42> The resin composition according to any one of <1> to <41> above, wherein the hydrophilic group is a sulfonate group.
<43> The resin composition according to any one of <1> to <42> above, wherein the monomer unit C1 is preferably derived from an aromatic monomer having two functional groups that are reactive with a carboxy group, more preferably derived from at least one selected from the group consisting of an aromatic diol, an aromatic diamine, and an aromatic alkanolamine, still more preferably derived from at least one selected from the group consisting of an aromatic diol, still more preferably derived from at least one selected from the group consisting of bisphenoxyethanolfluorene, bisphenolfluorene, biscresoxyethanolfluorene, and biscresolfluorene, and still more preferably derived from bisphenoxyethanolfluorene.
<44> The resin composition according to any one of <1> to <43> above, wherein the monomer unit C2 is preferably derived from an aliphatic monomer having two functional groups that are reactive with a carboxy group, more preferably derived from at least one selected from the group consisting of an aliphatic diol, an aliphatic diamine, and an aliphatic alkanolamine, still more preferably derived from at least one selected from an aliphatic diol, still more preferably derived from at least one selected from the group consisting of ethylene glycol, 1,2-propanediol, 1,3-propanediol, diethylene glycol, and dipropylene glycol, still more preferably derived from at least one selected from the group consisting of ethylene glycol, 1,2-propanediol, and 1,3-propanediol, and derived from ethylene glycol.
<45> The resin composition according to any one of <1> to <44> above, wherein the monomer unit A1 is preferably derived from at least one selected from the group consisting of an aromatic dicarboxylic acid having a hydrophilic group, more preferably derived from one or two selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, still more preferably derived from at least one selected from the group consisting of a sulfonate group-containing aromatic dicarboxylic acid, still more preferably derived from at least one selected from the group consisting of sulfophthalic acid and sulfonaphthalenedicarboxylic acid, still more preferably derived from at least one selected from the group consisting of sulfophthalic acid, still more preferably derived from at least one selected from the group consisting of sulfoisophthalic acid and sulfoterephthalic acid, still more preferably derived from at least one selected from the group consisting of sulfoisophthalic acid, and still more preferably derived from 5-sulfoisophthalic acid,
   the monomer unit A2 is preferably derived from at least one selected from the group consisting of an aromatic dicarboxylic acid having a hydrophilic group, more preferably derived from one or two selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, still more preferably derived from at least one selected from the group consisting of a sulfonate group-containing aromatic dicarboxylic acid, still more preferably derived from at least one selected from the group consisting of sulfophthalic acid and sulfonaphthalenedicarboxylic acid, still more preferably derived from at least one selected from the group consisting of sulfophthalic acid, still more preferably derived from at least one selected from the group consisting of sulfoisophthalic acid and sulfoterephthalic acid, still more preferably derived from at least one selected from the group consisting of sulfoisophthalic acid, and still more preferably derived from 5-sulfoisophthalic acid,
   the monomer unit B1 is preferably derived from at least one selected from the group consisting of an aromatic dicarboxylic acid having no hydrophilic group and an aliphatic dicarboxylic acid having no hydrophilic group, more preferably derived from at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid, still more preferably derived from at least one selected from the group consisting of terephthalic acid, 2,5-furandicarboxylic acid, and 2,6-naphthalenedicarboxylic acid, and still more preferably derived from 2,6-naphthalenedicarboxylic acid,
   the monomer unit B2 is preferably derived from at least one selected from the group consisting of an aromatic dicarboxylic acid having no hydrophilic group and an aliphatic dicarboxylic acid having no hydrophilic group, more preferably derived from at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid, still more preferably derived from at least one selected from the group consisting of terephthalic acid, 2,5-furandicarboxylic acid, and 2,6-naphthalenedicarboxylic acid, and still more preferably derived from 2,6-naphthalenedicarboxylic acid,
   the monomer unit C1 is preferably derived from an aromatic monomer having two functional groups that are reactive with a carboxy group, more preferably derived from at least one selected from the group consisting of an aromatic diol, an aromatic diamine, and an aromatic alkanolamine, still more preferably derived from at least one selected from an aromatic diol, still more preferably derived from at least one selected from the group consisting of bisphenoxyethanolfluorene, bisphenolfluorene, biscresoxyethanolfluorene, and biscresolfluorene, and still more preferably derived from bisphenoxyethanolfluorene,
   and the monomer unit C2 is preferably derived from an aliphatic monomer having two functional groups that are reactive with a carboxy group, more preferably derived from at least one selected from the group consisting of an aliphatic diol, an aliphatic diamine, and an aliphatic alkanolamine, still more preferably derived from at least one selected from an aliphatic diol, still more preferably derived from at least one selected from the group consisting of ethylene glycol, 1,2-propanediol, 1,3-propanediol, diethylene glycol, and dipropylene glycol, still more preferably derived from at least one selected from the group consisting of ethylene glycol, 1,2-propanediol, and 1,3-propanediol, and derived from ethylene glycol.
<46> A soluble material for three-dimensional modeling, including: the resin composition according to any one of <1> to <45> above.
<47> A support material that supports a three-dimensional object when the three-dimensional object is produced by a 3D printer of a fused deposition modeling system, including: the resin composition according to any one of <1> to <45> above.
<48> Use of the soluble material for three-dimensional modeling according to <46> above as a support material in production of a three-dimensional object by a 3D printer of a fused deposition modeling system.

### EXAMPLES

The pressure is expressed in an absolute pressure. "Normal pressure" refers to 101.3 kPa.

### <Method for preparing resin composition>

The method for preparing resin compositions 1 to 17 will be described below. Each weight average molecular weight of the resins α1 and α2 contained in the resin compositions 1 to 6, 14, and 15 and each percentage of the monomer units A1, A2, B1, B2, C1, and C2 based on a total of all monomer units of the resins α1 and α2 are shown in Tables 1 and 2. Each glass transition temperature of the resin compositions and the contents of the resin α1, the resin α2, and the organic salt compound β in the resin compositions calculated from the amounts of raw materials added are shown in Tables 3, 5, 7, and 8. Each percentage of the monomer units B1, B2, C1, and C2 based on a total of all the monomer units of the resins α1 and α2 was calculated from the amounts of the raw materials added under the assumption that the excessive amount of ethylene glycol and 1,3-propanediol was distilled off to the outside of the reaction system and the diol unit and the dicarboxylic acid unit reacted in equal amounts.

### [Preparation of resin composition 1]

Into a 2 L stainless steel separable flask (with a K tube, a stirrer, a nitrogen inlet tube), 23.7 g of dimethyl 2,6-naphthalenedicarboxylate (manufactured by Tokyo Chemical Industry Co., Ltd.), 52.1 g of dimethyl sodium 5-sulfoisophthalate (manufactured by Tokyo Chemical Industry Co., Ltd.), 22.4 g of ethylene glycol (manufactured by FUJIFILM Wako Pure Chemical Corporation), 26 mg of titanium tetrabutoxide (manufactured by Tokyo Chemical Industry Co., Ltd.), 117.3 g of bisphenoxyethanolfluorene (manufactured by Osaka Gas Chemicals Co., Ltd.), and 866 mg of anhydrous sodium acetate (manufactured by FUJIFILM Wako Pure Chemical Corporation) were charged, the temperature of the surface of a mantle heater was raised from 160°C to 260°C over 1 hour with the mantle heater with stirring under normal pressure and a nitrogen atmosphere, and the mixture was stirred for 6 hours and 30 minutes at the temperature to perform a transesterification reaction. Then, 17.6 g of tetrabutylphosphonium dodecylbenzenesulfonate (manufactured by TAKEMOTO OIL & FAT Co., Ltd., ELECUT S-418) was added, the temperature of the surface of the heater was raised from 260°C to 290°C over 30 minutes, and the mixture was stirred for 1 hour and 20 minutes. Then, the pressure was reduced from normal pressure to 2 kPa, and the temperature of the surface of the heater was raised from 290°C to 315°C over 35 minutes to perform a reaction. The temperature was raised to 315°C, then the mixture was stirred for 2 hours, and then stirred for 3 hours while gradually increasing the degree of pressure reduction from 2 kPa to 28 Pa to perform a reaction, and the pressure was returned to normal pressure to obtain a resin composition 1 including the resin α1 and the organic salt compound β.

### [Preparation of resin composition 2]

Into a 2 L stainless steel separable flask (with a K tube, a stirrer, a nitrogen inlet tube), 97.7 g of dimethyl 2,6-naphthalenedicarboxylate (manufactured by Tokyo Chemical Industry Co., Ltd., first class), 40.6 g of dimethyl sodium 5-sulfoisophthalate (manufactured by Wako Pure Chemical Industries, Ltd.), 76.7 g of ethylene glycol (manufactured by Wako Pure Chemical Industries, Ltd., highest quality), 82 mg of titanium tetrabutoxide (manufactured by Tokyo Chemical Industry Co., Ltd., first class), and 506 mg of sodium acetate (manufactured by Wako Pure Chemical Industries, Ltd., highest quality) were charged, the temperature of the surface of a mantle heater was raised from 140°C to 260°C over 1 hour with the mantle heater with stirring under normal pressure and a nitrogen atmosphere, and the mixture was stirred for 6 hours and 30 minutes at the temperature to perform a transesterification reaction. Then, 6.89 g of tetrabutylphosphonium dodecylbenzenesulfonate (manufactured by TAKEMOTO OIL & FAT Co., Ltd., product name: ELECUT S-418) was added thereto, and the resulting mixture was stirred for 15 minutes. Then, the temperature of the surface of the heater was raised from 260 to 290°C over 30 minutes, and at the same time, the pressure was reduced from normal pressure to 5.3 kPa to perform a reaction for 1 hour and a half under the conditions. Then, a reaction was performed with stirring at 800 Pa for 30 minutes, and then the pressure was returned to normal pressure. The temperature of the surface of the heater was raised from 290°C to 295°C at normal pressure over 15 minutes, then a reaction was performed with stirring at 420 Pa for 15 minutes, then a reaction was performed with stirring while gradually increasing the degree of pressure reduction from 470 Pa to 100 Pa over 15 minutes, and the pressure was returned to normal pressure to obtain a resin composition 2 including the resin α2.

### [Preparation of resin composition 3]

Into a 2 L stainless steel separable flask (with a K tube, a stirrer, a nitrogen inlet tube), 23.7 g of dimethyl 2,6-naphthalenedicarboxylate (manufactured by Tokyo Chemical Industry Co., Ltd.), 52.1 g of dimethyl sodium 5-sulfoisophthalate (manufactured by Tokyo Chemical Industry Co., Ltd.), 22.4 g of ethylene glycol (manufactured by FUJIFILM Wako Pure Chemical Corporation), 26 mg of titanium tetrabutoxide (manufactured by Tokyo Chemical Industry Co., Ltd.), 117.3 g of bisphenoxyethanolfluorene (manufactured by Osaka Gas Chemicals Co., Ltd.), and 866 mg of anhydrous sodium acetate (manufactured by FUJIFILM Wako Pure Chemical Corporation) were charged, the temperature of the surface of a mantle heater was raised from 160°C to 260°C over 1 hour with the mantle heater with stirring under normal pressure and a nitrogen atmosphere, and the mixture was stirred for 6 hours and 30 minutes at the temperature to perform a transesterification reaction. Then, the temperature of the surface of the heater was raised from 260°C to 290°C, the pressure was reduced from normal pressure to 1.5 kPa, and the temperature of the surface of the heater was raised from 290°C to 315°C over 20 minutes to perform a reaction. The temperature was raised to 315°C, then the mixture was stirred for 20 minutes, and then stirred for 1.5 hours while gradually increasing the degree of pressure reduction from 1.5 kPa to 500 Pa to perform a reaction, and the pressure was returned to normal pressure to obtain a resin composition 3 including the resin α1.

### [Preparation of resin composition 4]

Into a 2 L stainless steel separable flask (with a K tube, a stirrer, a nitrogen inlet tube), 97.7 g of dimethyl 2,6-naphthalenedicarboxylate (manufactured by Tokyo Chemical Industry Co., Ltd., first class), 40.6 g of dimethyl sodium 5-sulfoisophthalate (manufactured by Wako Pure Chemical Industries, Ltd.), 76.7 g of ethylene glycol (manufactured by Wako Pure Chemical Industries, Ltd., highest quality), 82 mg of titanium tetrabutoxide (manufactured by Tokyo Chemical Industry Co., Ltd., first class), and 506 mg of sodium acetate (manufactured by Wako Pure Chemical Industries, Ltd., highest quality) were charged, the temperature of the surface of a mantle heater was raised from 140°C to 260°C over 1 hour with the mantle heater with stirring under normal pressure and a nitrogen atmosphere, and the mixture was stirred for 6 hours and 30 minutes at the temperature to perform a transesterification reaction. Then, the temperature of the surface of the heater was raised from 260 to 290°C over 30 minutes, and at the same time, the pressure was reduced from normal pressure to 3 kPa to perform a reaction for 1 hour and a half under the conditions. Then, a reaction was performed with stirring at 800 Pa for 30 minutes, then the temperature of the surface of the heater was raised from 290°C to 295°C, then a reaction was performed by stirring for 3 hours while increasing the degree of pressure reduction to 500 Pa, and the pressure was returned to normal pressure to obtain a resin composition 4 including the resin α2.

### [Preparation of resin composition 5]

Into a 2 L stainless steel separable flask (with a K tube, a stirrer, a nitrogen inlet tube), 84.4 g of dimethyl 2,6-naphthalenedicarboxylate (manufactured by Tokyo Chemical Industry Co., Ltd., first class), 176.0 g of bisphenoxyethanolfluorene (manufactured by Osaka Gas Chemicals Co., Ltd.), 98.5 g of dimethyl sodium 5-sulfoisophthalate (manufactured by Wako Pure Chemical Industries, Ltd.), 71.9 g of ethylene glycol (manufactured by Wako Pure Chemical Industries, Ltd., highest quality), 79.8 mg of titanium tetrabutoxide (manufactured by Tokyo Chemical Industry Co., Ltd., first class), 1.50 g of anhydrous sodium acetate (manufactured by Wako Pure Chemical Industries, Ltd.), and 30.0 g of tetrabutylphosphonium dodecylbenzenesulfonate (manufactured by TAKEMOTO OIL & FAT Co.,Ltd., product name: ELECUT S-418) were charged, the temperature of the surface of a mantle heater was raised from 160°C to 260°C over 50 minutes with the mantle heater with stirring under normal pressure and a nitrogen atmosphere, and the mixture was stirred for 6 hours and 30 minutes at the temperature to perform a transesterification reaction. Then, the temperature of the surface of the heater was raised from 260 to 290°C over 30 minutes, and at the same time, the pressure was reduced from normal pressure to 5 kPa to perform a reaction for 40 minutes under the conditions. Then, the temperature of the surface of the heater was raised from 290 to 315°C, at the same time, the pressure was reduced from normal pressure to 5 kPa to 0.7 kPa, a reaction was performed with stirring for 2 hours, and the pressure was returned to normal pressure to obtain a resin composition 5 including the resin α1.

### [Preparation of resin composition 6]

Into a 2 L stainless steel separable flask (with a K tube, a stirrer, a nitrogen inlet tube), 100.0 g of dimethyl terephthalate (manufactured by Tokyo Chemical Industry Co., Ltd.), 100.0 g of dimethyl isophthalate (manufactured by Tokyo Chemical Industry Co., Ltd.), 91.5 g of dimethyl sodium 5-sulfoisophthalate (manufactured by SANYO CHEMICAL INDUSTRIES, LTD.), 145.6 g of 1,4-cyclohexanedimethanol (manufactured by FUJIFILM Wako Pure Chemical Corporation, cis-trans mixture), 103.4 g of 1,3-propanediol (manufactured by Tokyo Chemical Industry Co., Ltd.), 210 mg of titanium tetrabutoxide (manufactured by Tokyo Chemical Industry Co., Ltd.), and 563 mg of sodium acetate (manufactured by FUJIFILM Wako Pure Chemical Corporation) were charged, the temperature of the surface of a mantle heater was raised from 160°C to 220°C over 25 minutes with the mantle heater with stirring under normal pressure and a nitrogen atmosphere, and the mixture was stirred for 6 hours at the temperature to perform a transesterification reaction. Then, the temperature of the surface of the heater was raised from 220 to 240°C over 10 minutes, and at the same time, the pressure was reduced from normal pressure to 1.5 kPa to perform a reaction for 8 hours under the conditions. Then, the pressure was further reduced to 0.3 kPa while maintaining the temperature at 240°C to perform a reaction for 5.5 hours, finally, nitrogen was introduced into the stainless steel separable flask, and the pressure was returned to normal pressure to obtain a resin composition 6 including the resin α2.

### [Preparation of resin compositions 7 to 13]

Resin compositions having masses shown in Table 3 and Table 5 were melt-kneaded at 295°C and 90 r/min for 10 minutes using a melt-kneading machine (manufactured by Toyo Seiki Seisaku-sho, Ltd.: Labo Plastmill 4C150) to obtain each resin composition as a yellow mixture. The glass transition temperatures of resin compositions are shown in Tables 4 and 6. Resin compositions used for melt-kneading were subjected to a treatment at 60°C under reduced pressure to achieve a constant weight before weighing.

### [Preparation of resin composition 14]

Into a glass reactor having an internal capacity of 500 mL and equipped with a stirring blade, 100 g of N-methylpyrrolidone (manufactured by Tokyo Chemical Industry Co., Ltd.) was placed. Subsequently, 3.62 g of terephthalic acid (manufactured by Tokyo Chemical Industry Co., Ltd.), 2.19 g of monosodium 5-sulfoisophthalate (manufactured by Tokyo Chemical Industry Co., Ltd.), 0.696 g of hexamethylenediamine (manufactured by Tokyo Chemical Industry Co., Ltd.), 4.58 g of p-xylylenediamine (manufactured by Tokyo Chemical Industry Co., Ltd.), and 6.06 g of 4-methylmorpholine (manufactured by Tokyo Chemical Industry Co., Ltd.) were charged into the reactor, and stirred at 70 rpm for 2 hours. Then, the temperature was lowered to 5°C, 20.7 g of 4-(4,6-dimethoxy-1,3,5-triazine-2-yl)-4-methylmorpholinium chloride (manufactured by Tokyo Chemical Industry Co., Ltd.) was added, and stirring was continued in the air for 6 hours while maintaining the temperature at 5°C. After the reaction, the temperature was returned to room temperature, a DMF/methanol mixed solution (mass ratio: 2/1) was poured, and the mixture was allowed to stand to precipitate the resin. The resin was separated by filtration and dried at 150°C under reduced pressure (1 kPa or less) for 12 hours or more to obtain a resin composition 14 including the resin α1.

### [Preparation of resin composition 15]

Into a glass reactor having an internal capacity of 500 mL and equipped with a stirring blade, 100 g of N-methylpyrrolidone (manufactured by Tokyo Chemical Industry Co., Ltd.) was placed. Subsequently, 3.62 g of terephthalic acid (manufactured by Tokyo Chemical Industry Co., Ltd.), 2.19 g of monosodium 5-sulfoisophthalate (manufactured by Tokyo Chemical Industry Co., Ltd.), 3.48 g of hexamethylenediamine (manufactured by Tokyo Chemical Industry Co., Ltd.), and 6.06 g of 4-methylmorpholine (manufactured by Tokyo Chemical Industry Co., Ltd.) were charged into the reactor, and stirred at 70 rpm for 2 hours. Then, the temperature was lowered to 5°C, 20.7 g of 4-(4,6-dimethoxy-1,3,5-triazine-2-yl)-4-methylmorpholinium chloride (manufactured by Tokyo Chemical Industry Co., Ltd.) was added, and stirring was continued in the air for 6 hours while maintaining the temperature at 5°C. After the reaction, the temperature was returned to room temperature, a DMF/methanol mixed solution (mass ratio: 2/1) was poured, and the mixture was allowed to stand to precipitate the resin. The resin was separated by filtration and dried at 150°C under reduced pressure (1 kPa or less) for 12 hours or more to obtain a resin composition 15 including the resin α2.

### [Preparation of resin composition 16]

5% by mass solutions of the resin compositions 4 and 14 in 1,1,1,3,3,3-hexafluoro-2-propanol (manufactured by FUJIFILM Wako Pure Chemical Corporation) were prepared and compounded in parts by mass shown in Table 8 to obtain a 1,1,1,3,3,3-hexafluoro-2-propanol solution including the resin α1 and the resin α2. These solutions were poured into an aluminum cup and dried under reduced pressure at 150°C and 1 kPa or less for 12 hours or more to obtain a resin composition 16.

### [Preparation of resin composition 17]

A polyimide film was laid on a hot plate (digital hot plate NINOS ND-1 manufactured by AS ONE Corporation). The resin composition 3 (1.0 g) and the resin composition 15 (1.0 g) were dried at 60°C under reduced pressure, and then placed on the polyimide film, the hot plate was heated to 300°C, and the resins were mixed for 20 minutes while being melted to obtain a resin composition 17.

### [Analysis method]

### [Percentage of amount of substance of monomer unit (hereinafter, referred to as monomer unit A) derived from dimethyl sodium 5-sulfoisophthalate based on total of amount of substance of all monomer units in resin]

A sample was dissolved in a mixed solvent of deuterated chloroform and deuterated trifluoroacetic acid, and an amount of substance A obtained by dividing an integral value A of a peak derived from a benzene ring in a monomer unit A by the number of protons corresponding to the benzene ring in the monomer unit A and an amount of substance B obtained by dividing an integral value B of a peak derived from a naphthalene ring or a benzene ring in a monomer unit (hereinafter, referred to as monomer unit B) derived from one or two selected from dimethyl 2,6-naphthalenedicarboxylate, dimethyl terephthalate, and dimethyl isophthalate by the number of protons corresponding to the naphthalene ring or the benzene ring in the monomer unit B were calculated by proton NMR measurement using NMR MR400 manufactured by Agilent. The value obtained by dividing the amount of substance A by 2 times the sum of the amount of substance A and the amount of substance B, expressed in percentage (100 × amount of substance A / (2 × (amount of substance A + amount of substance B)), was defined as the percentage of the amount of substance of the monomer unit A based on a total of the amount of substance of all monomer units in the watersoluble polyester resin.

### [Weight average molecular weight (Mw)]

### (Resin compositions 1 to 6)

A calibration curve was prepared from standard polystyrene using a gel permeation chromatograph (GPC) method under the following conditions to determine the weight average molecular weight (Mw) of the resin α or β in the resin composition.
- Apparatus: HLC-8320 GPC (Detector integrated type, manufactured by TOSOH CORPORATION)
- Column: α-M × 2 columns (7.8 mmI.D. × 30 cm, manufactured by TOSOH CORPORATION)
- Eluent: 60 mmol/L phosphoric acid + 50 mmol/L brominated lithium dimethylformamide solution
- Flow rate: 1.0 mL/min
- Column temperature: 40°C
- Detector: RI detector
- Standard substance: polystyrene

### (Resin Compositions 14 and 15)

A calibration curve was prepared from standard polymethyl methacrylate under the same conditions as in the case of resin compositions 1 to 6 except for the conditions described below to determine the weight average molecular weight (Mw) of the resin α or β in the resin composition.
- Column: TSK-Gel Super AWM-H (manufactured by TOSOH CORPORATION)
- Eluent: HFIP/0.5 mM sodium trifluoroacetate
- Flow rate: 0.2 mL/min
- Standard substance: polymethyl methacrylate (PMMA)

### [Glass transition temperature]

A sample sandwiched between polyimide films was placed on a hot plate heated to 260°C, and a spatula was pressed from above to prepare a sheet having a thickness of about 0.2 mm. A sample (5 to 10 mg) was cut out from the sheet with scissors, precisely weighed, and sealed in an aluminum pan, the temperature was raised from 30°C to 300°C at 10°C/min, then the cooling rate was set to 150 °C/min, and the sample was cooled to 30 °C using a DSC apparatus (DSC 7020 manufactured by Seiko Instruments Inc.). The temperature was raised again to 300°C at 10°C/min to obtain a DSC curve, from which a glass transition temperature (°C) was determined.

### <Evaluation method>

### [Dissolution test of resin composition]

### (Examples 1 to 7, Comparative Examples 1 to 6)

Each (20 g) of the resin compositions shown in Tables 3 and 5 was ground with a coffee mill (Mini Blender manufactured by OSAKA CHEMICAL Co.,Ltd.) (grinding time: 10 seconds) to prepare an evaluation sample. Sample powder (1.0 g) was placed in 20 g of deionized water in a 50 mL screw tube, the dissolution state of the resin compositions was observed with stirring at 300 rpm using a magnetic stirrer, and the time taken for the resin compositions to be dissolved in water (dissolution time) was measured. The results are shown in Tables 4 and 6. In Tables, "insoluble" represents a state where an insoluble matter is observed even 60 minutes after the sample powder was placed into the screw tube, and "-" represents that evaluation was not performed.

### (Example 8 and Comparative Example 7)

Resin compositions described in Table 7 were placed in an aluminum bag and pulverized with a hammer to prepare an evaluation sample. Evaluation was performed under the same conditions as in Examples 1 to 7 and Comparative Examples 1 to 6 except that 0.20 g of sample powder was placed in 4 g of deionized water in a 20 mL screw tube. The results are shown in Table 7.

### (Example 9 and Comparative Example 8)

### [Preparation of film]

### (Example 9)

Resin compositions 4 and 14 were dissolved in 1,1,1,3,3,3-hexafluoro-2-propanol (manufactured by FUJIFILM Wako Pure Chemical Corporation) to prepare solutions each having a concentration of 5% by mass. The solution of the resin composition 4 (1.0 g) and the solution of the resin composition 14 (1.0 g) were put in a glass bottle to obtain a mixed solution. Two drops of this mixed solution were dropped onto a slide glass using a dropper, and dried at 150°C under reduced pressure (1 kPa or less) for 2 hours to prepare a film having a thickness of 30 µm. The thickness of the slide glass before the solution was dropped and the total of thicknesses of the film and the slide glass were measured using a micrometer, and the thickness of the film was calculated from the difference.

### (Comparative Example 8)

A film having a thickness of 30 µm was prepared by performing the same operations as in Example 9 except that two drops of the solution of the resin composition 14 was dropped onto a slide glass using a dropper.

### [Evaluation of appearance of film]

The appearance of each film was visually evaluated. The results are shown in Table 8.

### [Evaluation of water dispersibility]

Deionized water (500 mL) was placed in a 500 mL beaker, the temperature was raised to the temperature described in Table 8 on a hot plate, and the temperature was maintained until the end of this evaluation. The slide glass after the film formation was put in the beaker, and the sample formed on the slide glass was immersed in the deionized water after the temperature was raised and held. The time until the film on the slide glass was removed from the slide glass was visually observed. The results are shown in Table 8. In Table 8, "insoluble" represents a state where the presence of a film is observed even 60 minutes after the slide glass was immersed in deionized water.

**[Table 1]**

| Resin composition including resin α1 | Percentage of each monomer unit based on total of all monomer units in resin α1 [mol%] | | | | Content of hydrophilic group [mmol/g] | Weight average molecular weight |
|---|---|---|---|---|---|---|
| | A1 | B1 | C1 | C2 | | |
| Resin composition 1 | 32.2 | 17.8 | 49.0 | 1.00 | 1.00 | 29000 |
| Resin composition 3 | 32.2 | 17.8 | 49.0 | 1.00 | 1.00 | 11800 |
| Resin composition 5 | 24.5 | 25.5 | 29.6 | 20.4 | 1.00 | 25000 |
| Resin composition 14 | 13.5 | 36.5 | 40.0 | 10.0 | 0.93 | 5200 |

**[Table 2]**

| Resin composition including resin α2 | Percentage of each monomer unit based on total of all monomer units in resin α2 [mol%] | | | Content of hydrophilic group [mmol/g] | Weight average molecular weight |
|---|---|---|---|---|---|
| | A2 | B2 | C2 | | |
| Resin composition 2 | 12.5 | 37.5 | 50.0 | 1.00 | 17800 |
| Resin composition 4 | 12.5 | 37.5 | 50.0 | 1.0 | 19500 |
| Resin composition 6 | 12.0 | 38.0 | 50.0 | 0.82 | 11400 |
| Resin composition 15 | 13.5 | 36.5 | 50.0 | 1.00 | 14200 |

**[Table 3]**

| | | Mass (g) of resin composition used for melt-kneading | | Component of resin composition (% by mass) | | | Content of resin α1 ÷ Content of resin α2 |
|---|---|---|---|---|---|---|---|
| | | Resin composition 1 | Resin composition 2 | Resin α1 | Resin α2 | Organic salt compound β¹⁾ | |
| Example 1 | Resin composition 7 | 47.5 | 2.5 | 86.4 | 4.80 | 8.80 | 18 |
| Example 2 | Resin composition 8 | 45.0 | 5.0 | 81.8 | 9.50 | 8.70 | 8.6 |
| Example 3 | Resin composition 9 | 37.5 | 12.5 | 68.2 | 23.8 | 8.00 | 2.9 |
| Example 4 | Resin composition 10 | 25.0 | 25.0 | 45.5 | 47.6 | 6.90 | 0.96 |
| Comparative Example 1 | Resin composition 1 | - | - | 90.9 | 0 | 9.10 | - |
| Comparative Example 2 | Resin composition 2 | - | - | 0 | 95.2 | 4.80 | 0.00 |

| | | | | | | | |
|---|---|---|---|---|---|---|---|
| 1) Tetrabutylphosphonium dodecylbenzenesulfonate | | | | | | | |

**[Table 4]**

| | | Amount of substance of alkyl sulfonic acid ion of organic salt compound β ÷ Total of amount of substance of hydrophilic group of resin α1 and amount of substance of hydrophilic group of resin α2 | Tg (°C) | Dissolution time | |
|---|---|---|---|---|---|
| | | | | 90°C | 80°C |
| Example 1 | Resin composition 7 | 0.14 | 200, 188 | 30 min | - |
| Example 2 | Resin composition 8 | 0.14 | 186 | 20 min | - |
| Example 3 | Resin composition 9 | 0.13 | 175 | 10 min | 60 min |
| Example 4 | Resin composition 10 | 0.11 | 155 | 3 min | 8 min |
| Comparative Example 1 | Resin composition 1 | 0.15 | 201 | Insoluble | Insoluble |
| Comparative Example 2 | Resin composition 2 | 0.079 | 109 | - | 3 min |

**[Table 5]**

| | | Mass (g) of resin composition used for melt-kneading | | | | Component of resin composition (% by mass) | | | Content of resin α1 ÷ Content of resin α2 |
|---|---|---|---|---|---|---|---|---|---|
| | | Resin composition 3 | Resin composition 4 | Resin composition 5 | Resin composition 6 | Resin α1 | Resin α2 | Organic salt compound β¹⁾ | |
| Example 5 | Resin composition 11 | 37.1 | 12.9 | - | - | 74.1 | 25.9 | - | 2.9 |
| Example 6 | Resin composition 12 | - | 12.9 | 37.1 | - | 68.1 | 25.9 | 6.00 | 2.6 |
| Example 7 | Resin composition 13 | 37.1 | - | - | 12.9 | 74.1 | 25.9 | - | 2.9 |
| Comparative Example 3 | Resin composition 3 | - | - | - | - | 100 | 0 | - | - |
| Comparative Example 4 | Resin composition 4 | - | - | - | - | 0 | 100 | - | 0.00 |
| Comparative Example 5 | Resin composition 5 | - | - | - | - | 91.9 | 0 | 8.10 | - |
| Comparative Example 6 | Resin composition 6 | - | - | - | - | 0 | 100 | - | 0.00 |

| | | | | | | | | | |
|---|---|---|---|---|---|---|---|---|---|
| 1) Tetrabutylphosphonium dodecylbenzenesulfonate | | | | | | | | | |

**[Table 6]**

| | | Amount of substance of alkyl sulfonic acid ion of organic salt compound β ÷ Total of amount of substance of hydrophilic group of resin α1 and amount of substance of hydrophilic group of resin α2 | Tg (°C) | Dissolution time | |
|---|---|---|---|---|---|
| | | | | 90°C | 80°C |
| Example 5 | Resin composition 11 | - | 189 | 25 min | - |
| Example 6 | Resin composition 12 | 0.11 | 157 | 4 min | 15 min |
| Example 7 | Resin composition 13 | - | 168 | 10 min | 50 min |
| Comparative Example 3 | Resin composition 3 | - | 215 | Insoluble | Insoluble |
| Comparative Example 4 | Resin composition 4 | - | 109 | - | 4 min |
| Comparative Example 5 | Resin composition 5 | 0.13 | 175 | Insoluble | Insoluble |
| Comparative Example 6 | Resin composition 6 | - | 72 | - | 3 min |

**[Table 7]**

| | | Parts by mass of resin composition used for preparation | | Component of resin composition (% by mass) | | Content of resin α1 ÷ Content of resin α2 | Tg (°C) | Dissolution time | |
|---|---|---|---|---|---|---|---|---|---|
| | | Resin composition 3 | Resin composition 15 | Resin α1 | Resin α2 | | | 90°C | 80°C |
| Example 8 | Resin composition 17 | 50 | 50 | 50 | 50 | 1.00 | 199 | 50 min | - |
| Comparative Example 7 | Resin composition 15 | - | - | 0 | 100 | 0.00 | 168 | 7 min | 30 min |

**[Table 8]**

| | | Parts by mass of resin composition used for preparation | | Component of resin composition (% by mass) | | Content of resin α1 ÷ Content of resin α2 | Tg (°C) | Appearance of film | Water dispersibility (Fine dispersion time/Visual observation) | |
|---|---|---|---|---|---|---|---|---|---|---|
| | | Resin composition 4 | Resin composition 14 | Resin α1 | Resin α2 | | | | 80°C | 70°C |
| Example 9 | Resin composition 16 | 50 | 50 | 50 | 50 | 1.00 | 204 | Colorless and transparent | Less than 1 minute | 5 min |
| Comparative Example 8 | Resin composition 14 | - | - | 100 | 0 | - | 248 | Colorless and transparent | Insoluble | Insoluble |

Table 4 shows that the resin compositions 7 to 10 in which the resin composition 2 having a high solubility is compounded to the resin composition 1 having a low solubility in water have significantly improved solubilities in water at the same temperature while high glass transition temperatures are maintained.

Table 6 shows that the resin composition 11 in which the resin composition 4 having a high solubility is compounded to the resin composition 3 having a low solubility in water and the resin composition 13 in which the resin composition 6 having a high solubility is compounded to the resin composition 3 having a low solubility in water have significantly improved solubilities in water at the same temperature while high glass transition temperatures are maintained. Table 6 also shows that the resin composition 12 in which the resin composition 5 having a low solubility is compounded to the resin composition 4 having a high solubility in water has a significantly improved solubility in water at the same temperature while a high glass transition temperature is maintained.

Table 7 shows that the resin composition 17 in which the resin composition 15 having a high solubility is compounded to the resin composition 3 having a low solubility in water has a significantly improved solubility in water at the same temperature while a high glass transition temperature is maintained.

Table 8 shows that the resin composition 16 in which the resin composition 4 having a high dispersibility is compounded to the resin composition 14 having a low dispersibility in water has a significantly improved dispersibility at the same temperature while a high glass transition temperature is maintained.

## Claims

1. A resin composition, comprising:
a resin α1 having an aromatic dicarboxylic acid monomer unit A1 having a hydrophilic group, a dicarboxylic acid monomer unit B1 having no hydrophilic group, and an aromatic monomer unit C1; and
a resin α2 having an aromatic dicarboxylic acid monomer unit A2 having a hydrophilic group, a dicarboxylic acid monomer unit B2 having no hydrophilic group, and an aliphatic monomer unit C2,
wherein the resin α2 includes a monomer unit other than a monomer unit that constitutes the resin α1, and
a mass ratio of a content of the resin α1 to a content of the resin α2 is 0.9 or more and 20 or less.

2. The resin composition according to claim 1, wherein a content of the resin α1 in the resin composition is 40% by mass or more and 90% by mass or less.

3. The resin composition according to claim 1 or 2, wherein a percentage of the aromatic monomer unit C1 based on a total of all monomer units derived from a monomer having two functional groups that are reactive with a carboxy group in the resin α1 is 80 mol% or more and 100 mol% or less.

4. The resin composition according to any one of claims 1 to 3, wherein a molar ratio of the aromatic dicarboxylic acid monomer unit A1 to the dicarboxylic acid monomer unit B1 in the resin α1 is 20/80 or more and 90/10 or less.

5. The resin composition according to any one of claims 1 to 4, wherein a molar ratio of the aromatic dicarboxylic acid monomer unit A2 to the dicarboxylic acid monomer unit B2 in the resin α2 is 10/90 or more and 70/30 or less.

6. The resin composition according to any one of claims 1 to 5, comprising an organic salt compound β represented by General Formula (7) below:
(R²-SO₃-)ₙXⁿ⁺ (7)
(In the General Formula (7), R² represents a hydrocarbon group optionally having a substituent and having 1 to 30 carbon atoms, n represents a number of 1 or 2, Xⁿ⁺ represents a sodium ion, a potassium ion, a lithium ion, an ammonium ion, or a phosphonium ion when n is 1, and Xⁿ⁺ represents a magnesium ion, a calcium ion, a barium ion, or a zinc ion when n is 2.).

7. The resin composition according to any one of claims 1 to 6, wherein a percentage of the aromatic dicarboxylic acid monomer unit A1 based on a total of all dicarboxylic acid monomer units in the resin α1 is 20 to 90 mol%.

8. The resin composition according to any one of claims 1 to 7, comprising a resin having a percentage of the aromatic dicarboxylic acid monomer unit A2 based on a total of all dicarboxylic acid monomer units in the resin α2 of 10 to 70 mol%.

9. The resin composition according to any one of claims 1 to 8, wherein a content of a hydrophilic group other than a hydrophilic group that constitutes polymerization related to production of the resin in the resin α1 is 0.5 to 3.0 mmol/g.

10. The resin composition according to any one of claims 1 to 9, wherein a content of a hydrophilic group other than a hydrophilic group that constitutes polymerization related to production of the resin in the resin α2 is 0.5 to 3.0 mmol/g.

11. The resin composition according to any one of claims 1 to 10, wherein a weight average molecular weight of the resin α1 is 1,000 to 80,000.

12. The resin composition according to any one of claims 1 to 11, wherein a weight average molecular weight of the resin α2 is 5,000 to 60,000.

13. The resin composition according to any one of claims 1 to 12, wherein the hydrophilic group is a sulfonate group.

14. The resin composition according to any one of claims 1 to 13, wherein the aromatic monomer unit C1 is derived from an aromatic monomer having two functional groups that are reactive with a carboxy group.

15. The resin composition according to claim 14, wherein the aromatic monomer is an aromatic diol.

16. The resin composition according to any one of claims 1 to 15, wherein the aliphatic monomer unit C2 is derived from an aliphatic monomer having two functional groups that are reactive with a carboxy group.

17. The resin composition according to claim 16, wherein the aliphatic monomer is an aliphatic diol.

18. A soluble material for three-dimensional modeling, comprising:
the resin composition according to any one of claims 1 to 17.

19. A support material that supports a three-dimensional object when the three-dimensional object is produced by a 3D printer of a fused deposition modeling system, comprising:
the resin composition according to any one of claims 1 to 17.

20. Use of the soluble material for three-dimensional modeling according to claim 18 as a support material in production of a three-dimensional object by a 3D printer of a fused deposition modeling system.
